# EUROPÄISCHE PATENTSCHRIFT

(11) **EP 1 623 362 B1**
(45) Veröffentlichungstag und Bekanntmachung des Hinweises auf die Patenterteilung: **15.11.2006**
(21) Anmeldenummer: 04722571.9
(22) Anmeldetag: 23.03.2004
(51) Int. Cl.: G06K 13/08

(54) **KARTENAUFNAHMEVORRICHTUNG**
CARD RECEIVING DEVICE
DISPOSITIF DE RECEPTION DE CARTE

(30) Priorität: 12.05.2003 DE 10321203
(43) Veröffentlichungstag der Anmeldung: 08.02.2006
(73) Patentinhaber: SIEMENS AKTIENGESELLSCHAFT, 80333 München (DE)
(72) Erfinder: RIESTER, Thomas, 78052 Villingen-Schwenningen (DE); WAHLER, Torsten, 78073 Bad Dürrheim (DE)
(86) Internationale Anmeldenummer: PCT/EP2004/003080
(87) Internationale Veröffentlichungsnummer: WO 2004/100054

(56) Entgegenhaltungen:
- WO-A-00/07136
- DE-A- 19 955 300
- US-B1- 6 439 903

## Beschreibung

Die Erfindung betrifft eine Kartenaufnahmevorrichtung, insbesondere für einen Fahrtenschreiber in einem Kraftfahrzeug in Flachbauweise, welche eine Karte vollständig ins Innere einzieht, mit einer länglichen Aufnahmeöffnung, durch welche die Karte in einer Einschubrichtung in die Kartenaufnahmevorrichtung gelangt, und mit einer Verriegelungseinheit, welche mindestens ein Verriegelungselement aufweist, das in den lichten Querschnitt der Aufnahmeöffnung bewegbar ist.

Eine derartige Kartenaufnahmevorrichtung ist aus der Veröffentlichung WO 00/07136-A bekannt.

Der Schwerpunkt der Anwendung der erfindungsgemäßen Vorrichtung liegt im Bereich von Fahrtenschreibern bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens oder bei Schließsystemen. Vorteilhafte Anwendung findet die Erfindung in Kombination mit allen Arten von kartenförmigen Datenträgern. Aufgrund der hohen wirtschaftlichen und rechtlichen Bedeutung der zu erfassenden Daten bei Fahrtenschreibern, müssen die Aufzeichnungen zuverlässig gegen Manipulationen gesichert werden. Die Sicherungsmaßnahmen betreffen sowohl die Datenerfassung und Datenübertragung als auch die Übertragung und Speicherung der erfassten Daten im Speicher der Karte. Einschlägige Normen stellen strenge Anforderungen an den durch die Maßnahmen zu erreichenden Sicherheitsstandard. So ist vorgeschrieben, dass die Karte während der Lese- und Schreibvorgänge vollständig von der Kartenaufnahmevorrichtung aufgenommen ist und gegen die Umwelt mittels geeigneter Verschlussvorrichtungen isoliert ist. Die Verschlussvorrichtungen müssen in der Geschlossen-Stellung während der Lese- und Schreibvorgänge arretiert sein. Zusätzliche Schwierigkeiten ergeben sich aufgrund durch Verschmutzung bedingter Funktionsausfälle herkömmlicher Vorrichtungen insbesondere durch Kontaktunterbrechungen oder sogar beim Einzug der Karte. Der Einzug und die exakte Positionierung der Karte an den Kontakten der Vorrichtung sind problematisch, weil die Karten im Verhältnis zu der erforderlichen Positionsgenauigkeit zu den Kontakten der Vorrichtung hohe Fertigungstoleranzen aufweisen. Da die Karten sich in der Wahrnehmung des Benutzers vor allem durch eine hohe Robustizität auszeichnen, werden diese in der Regel nicht mit der eigentlich erforderlichen Sorgfalt behandelt, so dass zusätzlich zu den durch die Fertigung bedingten Toleranzen Verformungen und Beschädigungen die Funktionsweise im Zusammenspiel mit den Kartenaufnahmevorrichtungen beeinträchtigen. Darüber hinaus stellen die Betriebsbedingungen in Kraftfahrzeugen erhöhte Anforderungen an die Funktionssicherheit aufgrund der starken Schwingungen und unzähligen Stöße sowie der weitreichenden Temperaturschwankungen. Die Realisierung der Manipulationssicherheit und der gewünschte Komfort bei der Handhabung machen einen vollautomatischen Karteneinzug erforderlich. Diesem Erfordernis nachzukommen stellt die Konstruktion jedoch vor große Schwierigkeiten, weil der zur Verfügung stehende Bauraum in einem Fahrtenschreiber in der Größe eines Autoradios nur etwa eine Höhe von 10 mm für den vollautomatischen Einzug bereitstellt.

Besondere Schwierigkeiten ergeben sich einerseits aus dem kleinen zur Verfügung stehenden Bauraum, den gesetzlichen Vorschriften, die ein Verschließen der Vorrichtung vorschreiben und ein Arretieren des Verschlusses, den Ungenauigkeiten der zu benutzenden Karten, dem schmutzbeladenen Milieu und dem Einfallsreichtum bei Manipulationsversuchen.

Aus der Deutschen Patentanmeldung 101 53 995 ist bereits ein Chipkarten-Aufnahmegerät mit Verriegelungsmitteln bekannt, die derart ausgebildet und gelagert sind, dass sie in einer Ebene parallel zu der Bewegungsebene der Chipkarte bewegbar sind. Riegelelemente sind hierbei hakenartig ausgebildet und umgreifen eine in der Schreibposition befindliche Chipkarte stirnseitig. Es hat sich jedoch gezeigt, dass die vorgeschlagene Ausführung nur eine geringe Toleranz gegenüber Fehlbedienungen aufweist, insbesondere, wenn eine Karte nicht bis zum Anschlag in die vorgesehene Klemmeinheit eingeführt wird. In einem solchen Fall neigt die Vorrichtung bei grober Fehlpositionierung zum Verkanten und Blockieren, und bei nur geringfügiger Fehlpositionierung zu einer fehlerhaften Kontaktierung der Chipkarte in der Schreibposition.

Ausgehend von den Problemen und Nachteilen des Standes der Technik liegt der Erfindung die Aufgabe zugrunde, eine Kartenaufnahmevorrichtung zu schaffen, die einschlägigen Bestimmungen betreffend die Sicherung einer aufzunehmenden Karte in der Vorrichtung genügen, eine hohe Toleranz gegenüber fehlerhaftem Einschub von Karten aufweist, insbesondere unter widrigen Bedingungen ein sicheres Kontaktieren der aufzunehmenden Karte gewährleistet.

Erfindungsgemäß wird die Aufgabe durch eine Kartenaufnahmevorrichtung der eingangs genannten Art gelöst, bei welcher das Verriegelungselement mindestens eine Anlagefläche aufweist, welche die in der Kartenaufnahmevorrichtung befindliche Karte an der nach außen weisenden Stirnseite oder im Bereich einer an dieser Stirnkante angrenzenden Ecke oder Rundung der Karte berührt und zumindest zeitweise in Einschubrichtung drückt.

Ein entscheidender Vorteil der Erfindung liegt in der Doppelfunktion des Verriegelungselementes, welches einerseits die Aufnahmeöffnung vorschriftsmäßig versperrt, so dass der verbleibende lichte Querschnitt zu klein ist, als dass eine Karte ihn passieren könnte, und zum anderen übernimmt das Verriegelungselement eine gegebenenfalls erforderliche Feinpositionierung der Karte in der Kartenaufnahmevorrichtung, so dass eine sichere Kontaktierung erfolgen kann.

Damit die Vorrichtung eine möglichst flache Bauweise mit zuverlässiger Funktion vereint, ist es zweckmäßig, wenn sich die Karte im Wesentlichen in einer Einschubebene in Einschubrichtung bewegt.

Da das Verriegelungselement bevorzugt Gegenstand in betrügerischer Absicht vorgenommener mechanischer Manipulationen ist, ist es zweckmäßig, wenn es um eine erste Drehachse drehbar gelagert ist und auf diese Weise unter Ausnutzung von Hebelverhältnissen ein hohes Maß an Robustizität erzielt werden kann. Daneben kann die in nur kleiner Amplitude erfolgende Rotationsbewegung des Verriegelungselementes Platz sparend in dem geringen zur Verfügung stehenden Bauraum realisiert werden, insbesondere, wenn die erste Drehachse senkrecht zu der Einschubebene der Karte verläuft. Ein weiterer Vorteil der Rotationsbewegung des Verriegelungselementes liegt in der Einschränkung des Freiheitsgrades der Bewegung auf das erforderliche Mindestmaß, so dass unter Ausschluss der Gefahr des Verkantens die Kartenaufnahmevorrichtung eine kulissenartige erste Führung zweckmäßig aufweist und vorteilhaft das Verriegelungselement ein erstes Führungselement in der Art eines Kulissensteins aufweist, welches in der ersten Führung derart geführt wird, so dass das Verriegelungselement in eine Verriegelungsposition und aus der Verriegelungsposition heraus bewegbar ist, insbesondere hierbei um die erste Drehachse verschwenkbar ist. Die Anordnung der ersten Drehachse senkrecht zur Einschubebene der Karte erweist sich hierbei als besonders zweckmäßig, weil bei entsprechender Anordnung des Verriegelungselementes die in Umfangsrichtung erfolgende Bewegung zweckmäßig die Aufnahmeöffnung versperrt. Die Vorteile der kulissenartigen ersten Führung kommen besonders zum Tragen, wenn die erste Führung Bestandteil eines um eine zweite Drehachse drehbaren Stellhebels ist. Ebenso gute Erfolge lassen sich erzielen, wenn in kinematischer Umkehr ein erstes Führungselement Bestandteil des drehbaren Stellhebels ist und die erste Führung Teil des Verriegelungselementes ist. Der Drehbewegung des Verriegelungselementes kann hierbei eine beliebige Charakteristik über die Formgebung der kulissenartigen ersten Führung verliehen werden. Auf Grund der Lagerung des Stellhebels um eine zweite Drehachse eignet sich die Vorrichtung besonders gut zur getrieblichen Ankopplung an einen Drehantrieb.

Hinsichtlich der Feinpositionierung der aufzunehmenden Karte werden besonders gute Ergebnisse erzielt, wenn das Verriegelungselement ein an diesem beweglich angebrachtes Anlagestück aufweist, welches an der Karte an der nach außen weisenden Stirnseite oder im Bereich einer an dieser Stirnseite angrenzenden Ecke oder Rundung der Karte zeitweise anliegt und zumindest zeitweise die Karte in Einschubrichtung drückt. Die Beweglichkeit des Anlagestücks ermöglicht die Berücksichtigung aller im Toleranzfeld der genormten Karten auftretenden Abmessungen, so dass stets eine zuverlässige Kontaktierung möglich ist. Um die Feinpositionierung der Karte in dem Gerät auch von der Unsicherheit der Maßtoleranz der gesamten Karte zu befreien, ist es sinnvoll, wenn das Anlagestück an dem Verriegelungselement federnd gelagert ist und auf diese Weise eine permanente Anlage des Anlagestücks an der Karte hergestellt werden kann.

Besonders gut eignet sich eine erste Blattfeder zur federnden Lagerung des Anlagestücks. Die erste Blattfeder ist hierbei zweckmäßig mit einem quer zur Einschubrichtung und parallel zur Einschubebene der aufzunehmenden Karte orientierten Federweg ausgebildet, vorteilhaft als Teil des Verriegelungselements ausgebildet.

Zur sicheren Feinpositionierung der Karte ist es zweckmäßig, wenn das Verriegelungselement in Relation zu den durchschnittlichen Abmessungen einer aufzunehmenden Karte einen gewissen Überhub aufweist und das Anlagestück im Wesentlichen tangential zur Umfangsrichtung der ersten Drehachse des Verriegelungselementes beweglich an dem Verriegelungselement gelagert ist und auf diese Weise den Überhub des Verriegelungselementes kompensieren kann, so dass die Karte während der Anlage des Anlagestücks mittels der Federkraft der federnden Lagerung verspannt ist. Insbesondere bei einer Anlage des Anlagestücks an der Karte an einer der nach außen weisenden Stirnkante benachbarten Ecke oder Rundung während einer Phase der Einwärtsbewegung ist es zweckmäßig, wenn eine Anlagefläche an dem Anlagestück schräg zu der Relativbeweglichkeitsrichtung des Anlagestücks zu dem Verriegelungselement orientiert ist. Die schräge Ausrichtung sorgt hierbei für einen Druck der Karte in Einwärtsrichtung bei einer Beweglichkeit des Anlagestücks tangential zur Umfangsrichtung der ersten Drehachse des Verriegelungselementes und einer elastischen Vorspannung in diese Richtung.

Zur vollumfänglichen Erfüllung einschlägiger Vorschriften ist eine Arretierung des Verriegelungselementes vorteilhaft, bei welcher an mindestens einem Verriegelungselement ein Arretierelement angebracht ist, welches in eine "Arretiert-Stellung" bewegbar ist, und die Verriegelungseinheit in einer "Verriegelt-Stellung" arretiert. Das Arretierelement ist hierbei vorzugsweise derart ausgebildet, dass das Arretierelement beim Versuch des Öffnens der Verriegelung auf Scherung belastet wird. Eine kostengünstige Lösung der Arretierung liegt vor, wenn genau an einem Verriegelungselement ein Arretierelement angebracht ist. Besonders zweckmäßig erweist sich eine Ausbildung des Arretierelements, die sowohl das Verriegelungselement in der "Verriegelt-Stellung" arretiert, als auch die Beweglichkeit des Anlageelements in dieser Stellung einschränkt. Die Einschränkung der Beweglichkeit ist zweckmäßig so auszulegen, dass das Anlagestück zu dem Arretierelement in der "Arretiert-Stellung" so viel Spiel hat, dass es im Ausmaß der Breiten-, Längen- und Formtoleranz der Karte federnd beweglich ist und das Anlagestück zu dem Arretierelement in der "Arretiert-Stellung" so wenig Spiel hat, dass die lichte Weite der Aufnahmeöffnung so weit versperrt ist, dass die Karte nicht entnehmbar ist. Unabhängig von der Bewegungsphase befindet sich das Arretierelement, insbesondere zur Einschränkung der Beweglichkeit des Anlagestücks stets in der vorteilhaft richtigen Position in der Vorrichtung, wenn das Arretierelement an dem Verriegelungselement beweglich angebracht ist. Auf diese Weise wird die Toleranzkette zwischen dem Anlagestück und dem Arretierelement auf ein Minimum reduziert, was vor allem in Hinblick auf die Beweglichkeit des Anlagestücks und das großzügige Toleranzfeld einschlägiger Karten von Bedeutung ist. Eine zweckmäßige Ausbildung der Kombination des Arretierelements mit dem Verriegelungselement sieht vor, dass das Arretierelement relativ zu dem Verriegelungselement translatorisch beweglich und an dem Verriegelungselement gleitgelagert ist. Auf diese Weise kann das Arretierelement als längliches Bauteil mit einer Haupterstreckungsrichtung in Einschubrichtung Platz sparend lateral zu dem Aufnahmeschacht der Kartenaufnahmevorrichtung angeordnet werden. Ebenso vorteilhaft ist die Anordnung von sich in Einschubrichtung erstreckender Verriegelungselemente länglicher Bauweise lateral zu dem Aufnahmeschacht der Vorrichtung. Eine vorteilhafte Weiterbildung sieht vor, dass das Arretierelement mittels eines Stellhebels steuerbar und bewegbar ist, wobei zweckmäßig derselbe Stellhebel sowohl das oder die Verriegelungselemente als auch das oder die Arretierelemente steuert und bewegt.

Eine zweckmäßig Variante umfasst zwei Verriegelungselemente, wobei die Kartenaufnahmevorrichtung zwei an einer senkrecht zur Einzugsebene orientierten Mittelebene eines Aufnahmeschachtes spiegelbildlich zueinander und seitlich des Aufnahmeschachtes angeordnete Verriegelungselemente aufweist. Diese beiden Verriegelungselemente sind vorzugsweise um parallele jeweils erste Drehachsen gelagert, und bei einer Bewegung des Stellhebels führen die Verriegelungselemente gegenläufige Bewegungen aus. Zweckmäßig ist eine Ausbildung der Verriegelung, bei welcher die Verriegelungselemente bei einer Bewegung in die "Geschlossen-Stellung" sich seitlich der Aufnahmeöffnung zangenartig aufeinander bewegen.

Zum Zwecke einer vorteilhaften taktilen Wahrnehmung ist es sinnvoll, wenn die Kartenaufnahmevorrichtung einen Anschlag für die Karte am Ende eines Kartenaufnahmeschachtes aufweist. Dieser Anschlag dient zugleich einer präzisen Positionierung der Karte in der Vorrichtung und sollte daher in enger Toleranz zu einem Kontaktsatz der Vorrichtung, welcher die Karte kontaktiert, angeordnet sein. Eine Ausbildung des Anschlags und des Kontaktsatzes als einstückiges Bauteil begünstigt die Toleranzgenauigkeit. Für eine geeignete Feinpositionierung und eine dauerhaft korrekte Lage der Karte auch bei starken Vibrationen ist es sinnvoll, wenn die Karte in der Endposition mittels eines elastischen Elements permanent gegen den Anschlag gedrückt wird. Besonders gut ist hierzu das Anlagestück an dem Verriegelungselement geeignet.

Insbesondere zur Erfüllung einschlägiger Schutzklassen, beispielsweise der IP 54, ist es sinnvoll, wenn die Kartenaufnahmevorrichtung einen Verschluss aufweist, welcher sich in Längsrichtung der Aufnahmeöffnung erstreckt und in der "Geschlossen-Stellung" des Verschlusses die Aufnahmeöffnung versperrt bzw. verschließt. Der Verschluss sollte vorzugsweise die Aufnahmeöffnung staubdicht und spritzwasserdicht zur Umgebung hin verschließen. Im Sinne maximaler Robustizität und bei nur geringem zur Verfügung stehendem Bauraum ist es zweckmäßig, wenn sich das Verschlusselement im Rahmen des für die Aufnahme der Karte erforderlichen Hubes in Normalenrichtung der Einschubebene bewegen kann. Zur weiteren Bauraumersparnis führt eine federnde Lagerung des Verschlusselementes an der Kartenaufnahmevorrichtung mittels mindestens eines elastischen Elementes. Auf diese Weise kann ein Beiseiteschieben des Verschlusses bzw. ein Verdrängen mittels einer händisch in die Aufnahmeöffnung eingeführten Karte einen etwaigen Antrieb der Bewegung des Verschlusses kostengünstig ersetzen. Beste Erfolge mit minimalem Aufwand werden erzielt, wenn das elastische Element eine zweite Blattfeder ist und die zweite Blattfeder mittels des Verriegelungselementes der Verriegelungseinheit in der "Geschlossen-Stellung" des Verschlusses blockierbar ist. So kann beispielsweise am Ort der maximalen Bewegungsamplitude der zweite Blattfeder, wenn sich der Verschluss in der "Geschlossen-Stellung" befindet, das in den Bewegungsraum der zweite Blattfeder bewegbare Verriegelungselement der Verriegelungseinheit die Beweglichkeit der zweite Blattfeder zweckmäßig einschränken. Eine sinnvolle Weiterbildung sieht vor, dass das Verschlusselement mittels der Verriegelungseinheit in der "Geschlossen-Stellung" verriegelbar ist. Einer flachen Bauweise zuträglich ist eine Beweglichkeit des Verriegelungselementes der Verriegelungseinheit in einer im Wesentlichen zu der sich in der Kartenaufnahmevorrichtung bewegenden Karte parallelen Ebene, insbesondere eine Drehbarkeit.

Die Vorteile der Erfindung kommen besonders zum Tragen, wenn die Karte automatisch einziehbar ist und automatisch ausgebbar ist. Gerade bei nicht vollautomatischen Vorrichtungen ist die Erfüllung der Sicherheitsstandards problematisch, da die Karte in der Schreibposition nicht zugänglich sein darf und daher keine manuelle Unterstützung des Transportes der Karte in die Endposition an den Kontaktsatz erfolgen kann.

Ebenfalls erfindungsgegenständlich ist ein Verfahren zur Aufnahme einer Karte in eine Kartenaufnahmevorrichtung, insbesondere für einen Fahrtenschreiber in einem Kraftfahrzeug in Flachbauweise, welche eine Karte in eine Einschubebene vollständig einzieht, mit einer länglichen Aufnahmeöffnung, durch welche die Karte in einen Aufnahmeschacht der Kartenaufnahmevorrichtung gelangt und mit einer Verriegelungseinheit, welche mindestens ein Verriegelungselement aufweist, das in den lichten Querschnitt der Aufnahmeöffnung bewegbar ist.

Einschlägig bekannte Verfahren vorgenannter Art sind ähnlich nachteilsbehaftet, wie die dafür vorgesehenen und bereits erläuterten Vorrichtungen.

Zur Lösung der obigen Aufgabe wird ein Verfahren der vorgenannten Art vorgeschlagen, bei welcher das Verriegelungselement die in der Kartenaufnahmevorrichtung befindliche Karte an der nach außen weisenden Stirnseite oder im Bereich einer an dieser Stirnkante angrenzenden Ecke oder Rundung der Karte zeitweise anliegt und zumindest zeitweise die Karte in Einschubrichtung drückt.

Bereits erläuterte Vorteile gehen mit einem permanenten Andruck der Karte mittels des Verriegelungselementes während eines Schreibvorganges an einen Anschlag einher. In konkreter Umsetzung des erfindungsgemäßen Verfahrens ist es besonders vorteilhaft, wenn in einem ersten Schritt eine Klemmeinheit die Karte klemmt, in einem zweiten Schritt die Karte in die Kartenaufnahmevorrichtung transportiert wird, in einem dritten Schritt die Klemmung der Karte von der Karte gelöst wird und in einem vierten Schritt die Verriegelungseinheit die Karte an eine Endposition schiebt. Die Benutzung einer Klemmeinheit zur Fixierung und zum Transport der Karte trägt maßgeblich zu einer aufgabengemäßen Bauraumersparnis bei und eine sichere Kontaktierung der Karte wird erfindungsgemäß erreicht durch das Lösen der Klemmeinheit nach erfolgtem Einzug der Karte in die Vorrichtung und durch ein Schieben der Karte in die für den Datenübertragungsvorgang vorgesehene Endposition. Zweckmäßig drückt das Verriegelungselement die Karte während Datenübertragungsvorgängen permanent an einen Anschlag.

Zur Verdeutlichung der Erfindung ist in der Folge ein spezielles Ausführungsbeispiel unter Bezugnahme auf Zeichnungen beschrieben. Es zeigen:
- Figur 1: eine perspektivische Darstellung eines Verriegelungshebels, der in der in den Figuren 7 bis 13 dargestellten Kartenaufnahmevorrichtung auf der linken Seite angeordnet ist,
- Figur 2: eine Unteransicht auf den Verriegelungshebel der Figur 1,
- Figur 3: eine perspektivische Darstellung eines Verriegelungshebels, der in der in den Figuren 7 bis 13 dargestellten Kartenaufnahmevorrichtung auf der rechten Seite angeordnet ist,
- Figur 4: eine Draufsicht auf einen Stellhebel gemäß der in Figur 5 ausgewiesenen Blickrichtung A,
- Figur 5: eine Seitenansicht eines Stellhebels gemäß der in Figur 4 ausgewiesenen Blickrichtung B,
- Figur 6: ein Längsschnitt durch eine erfindungsgemäße Vorrichtung gemäß dem Schnitt H-H der Figur 8,
- Figur 7: eine Draufsicht auf eine erfindungsgemäße Kartenaufnahmevorrichtung mit einer Karte in einer Bewegungsphase, bevor die Karte in die Aufnahmeöffnung eingeführt wird,
- Figur 8: eine Draufsicht auf eine erfindungsgemäße Kartenaufnahmevorrichtung in einer Bewegungsphase, bei welcher die Karte sich kurz vor dem Anschlag des Aufnahmeschachts befindet,
- Figur 9: eine Draufsicht auf eine erfindungsgemäße Kartenaufnahmevorrichtung in einer Bewegungsphase, bei welcher sich die Karte an dem Anschlag des Aufnahmeschachtes befindet und die Verriegelungseinheit mit der Verriegelung beginnt,
- Figur 10: eine erfindungsgemäße Kartenaufnahmevorrichtung in der Draufsicht in einer Bewegungsphase, bei welcher der Prozess der Verriegelung kurz vor dem Ende steht und die Arretierung beginnt,
- Figur 11: eine erfindungsgemäße Kartenaufnahmevorrichtung in einer Draufsicht in einer Bewegungsphase, bei welcher die Verriegelung arretiert ist,
- Figur 12: eine erfindungsgemäße Kartenaufnahmevorrichtung in der Draufsicht in einer Bewegungsphase, bei welcher die Verriegelungselemente geöffnet sind, die Arretierung noch nicht aufgehoben ist und der Auswurf der Chipkarte bevorsteht,
- Figur 13: eine erfindungsgemäße Kartenaufnahmevorrichtung in der Draufsicht in einer Bewegungsphase, bei welcher die Arretierung vollständig gelöst ist und die Karte aus dem Aufnahmeschacht bewegt wird.

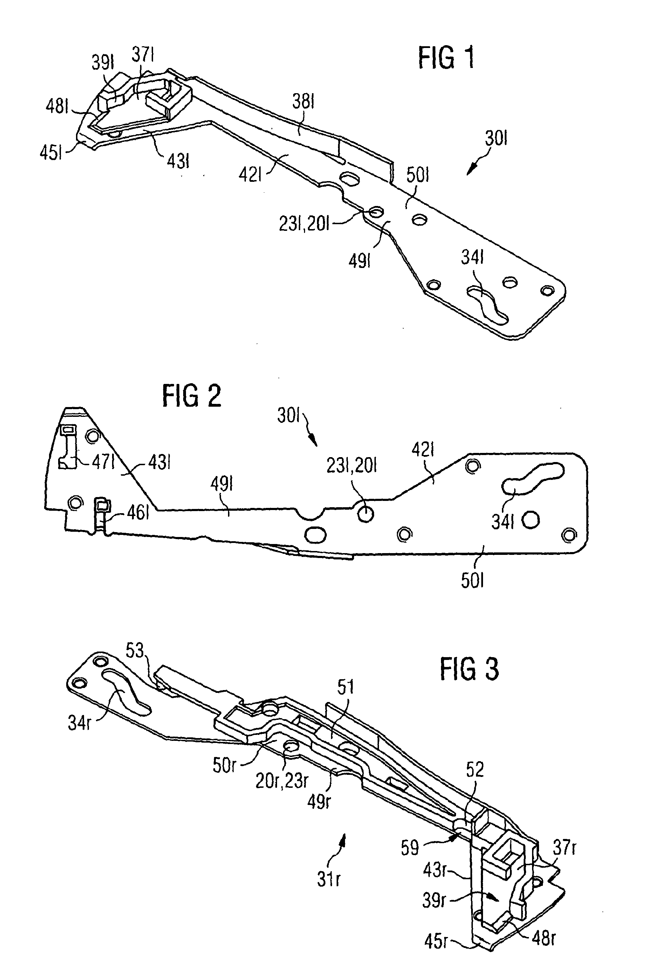

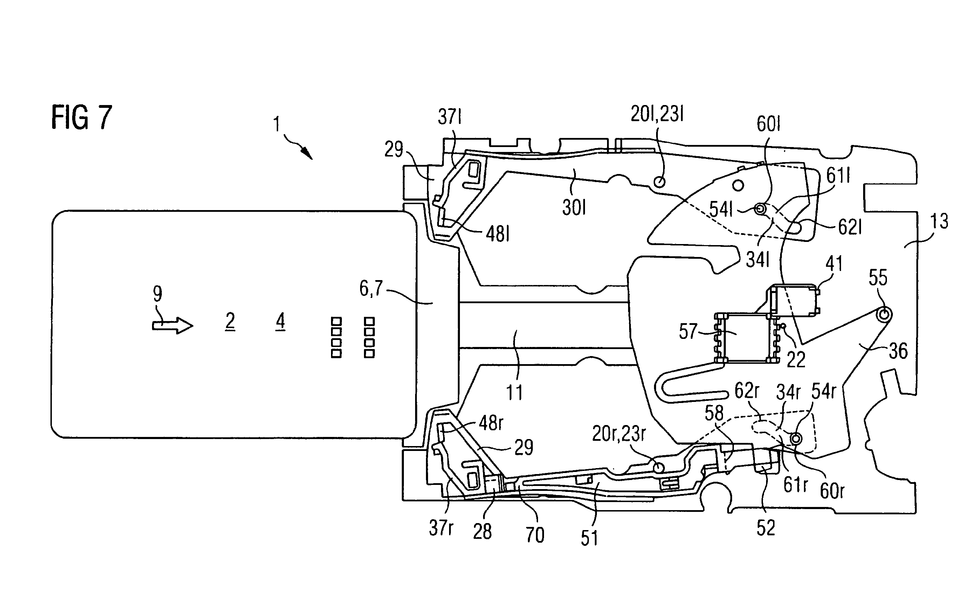

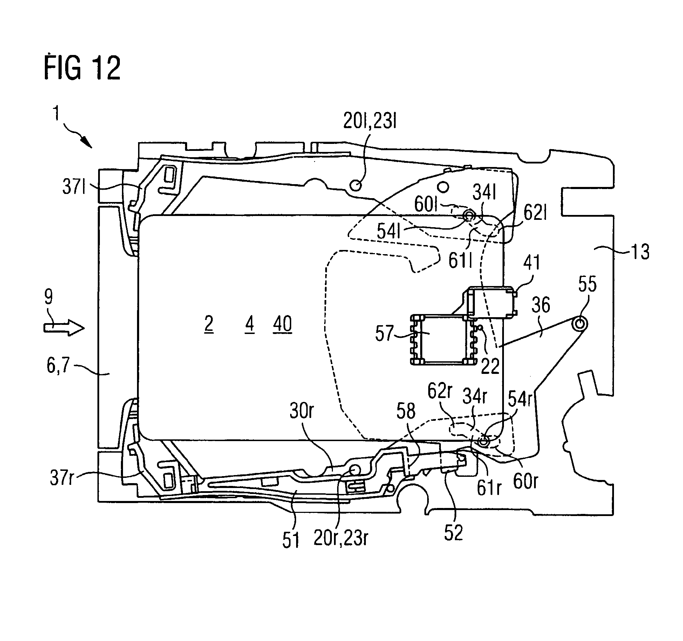

Das in Figur 1 und 2 dargestellte Verriegelungselement 301 ist mit dem Bezugszeichen 301 versehen und besteht im Wesentlichen aus einem flachen, länglichen Hebel 421, einem Anlagestück 371 und einer ersten Blattfeder 381. Der Hebel 421 weist einen Grundkörper 491 und einen in der Kartenaufnahmevorrichtung 1 eingangsseitig angeordneten Ausleger 431 auf, der als Vorsprung im zusammengefügten Zustand in die Mitte eines Aufnahmeschachtes 40 für eine Karte 2 weist. Im Bereich des Auslegers 431 ist das Anlagestück 371 gleitgelagert und linear verschiebbar an dem Verriegelungselement 301 gelagert. Das Verriegelungselement 301 weist eine erste Lagerung 231 für eine in den Figuren 7-13 dargestellten in einer ersten Drehachse 201 drehbar gelagerten ersten Zapfen 441 auf. Die erste Drehachse 201 ist zwischen dem Anlagestück 371 und einer ersten Führung 341 angeordnet. Der Ausleger 431 ist mit einer in Umfangsrichtung zu der ersten Drehachse ansteigenden Schräge 451 versehen. Das Anlagestück 371 ist in Umfangsrichtung zu der ersten Drehachse im Wesentlichen tangential in einer dritten Führung 461 und vierten Führung 471 jeweils linear beweglich gleitgelagert und liegt an der ersten Blattfeder 381 an. Die erste Blattfeder 381 erstreckt sich im Wesentlichen in Einschubrichtung 9 und weist einen quer zur Einschubrichtung 9 und parallel zur Einschubebene 4 orientierten Federweg auf. Das Anlagestück 371 weist eine in Einschubrichtung 9 ansteigende Einlaufschräge 481 für eine Karte 2 auf. Das Anlagestück 371 ist mit einer Anlagefläche 391 versehen, welche zu einer dortigen Tangente an der Umfangsrichtung zu der ersten Drehachse 201 schräg verläuft. Der Grundkörper 491 des Hebels 421 besteht aus einer ausgestanzten Blechform, welche die erste Blattfeder 381 als einstückigen Bestandteil aufweist, wobei die erste Blattfeder 381 rechtwinklig zu einer Grundplatte 501 des Hebels 421 abgebogen ist.

Das in Figur 3 dargestellte, in der Kartenaufnahmevorrichtung 1 rechtsseitig angeordnete Verriegelungselement 30r weist hinsichtlich einer ersten Lagerung 23r in einer ersten Drehachse 20r, einer ersten Führung 34r, einem ersten Anlagestück 37r, einer Anlagefläche 39r, eines Hebels 42r, eines Auslegers 43r, eines ersten Zapfens 44r, einer Schräge 45r, einer dritten Führung, einer vierten Führung, einer Einlaufschräge 48r, eines Grundkörpers 49r und einer Grundplatte 50r im Wesentlichen den gleichen, jedoch an einer senkrecht zu einer Einschubebene 4 des Aufnahmeschachtes 40 der Kartenaufnahmevorrichtung 1 Ebene spiegelbildlich angeordneten Aufbau auf.

Zusätzlich ist an dem rechten Verriegelungselement 30r ein Arretierelement 51 bewegbar angebracht. Das Arretierelement 51 ist in nicht näher dargestellten linearen Führungen an der Grundplatte 50r des Grundkörpers 49r des Hebels 42r gleitgelagert. An einem dem Anlagestück 37r zugewendeten Ende ist das Arretierelement 51 mit einer verjüngt ausgebildeten ersten Ausformung 70 versehen, welche mit einer nicht näher dargestellten Ausnehmung 59 an dem Anlagestück 37r in der Weise korrespondiert, dass in einer "Arretiert-Stellung" die Beweglichkeit in der linearen Lagerung des Anlagestücks 37r bis auf ein im Wesentlichen der Fertigungstoleranz der aufzunehmenden Karte 2 entsprechendes Spiel eingeschränkt ist.

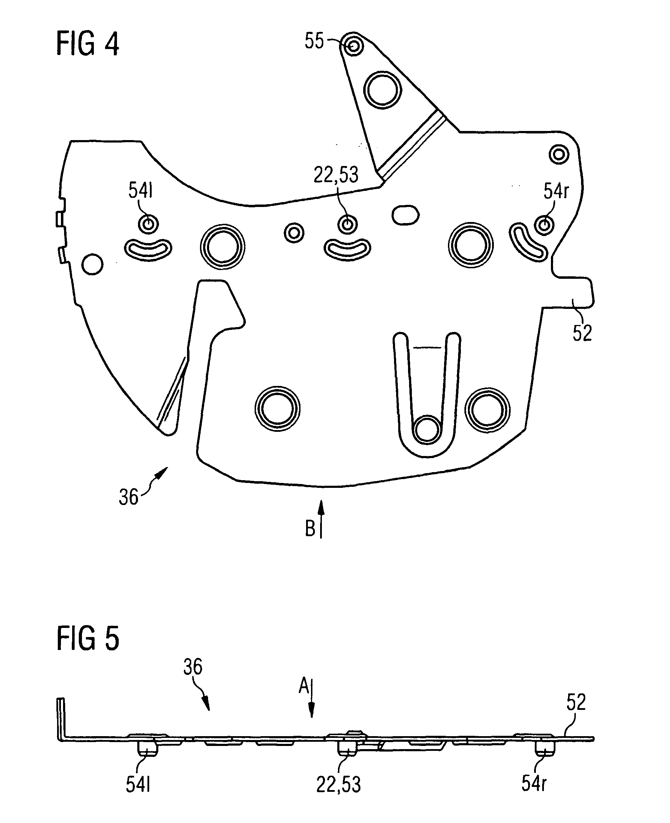

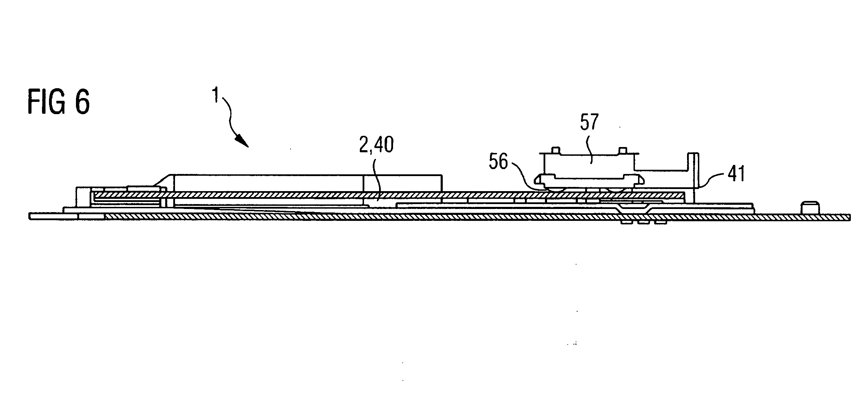

Der in Figur 4 und 5 dargestellte Stellhebel 36 betätigt mittels einer Drehbewegung um an einen in einer zweiten Drehachse 22 angeordneten und an einem sämtliche Bauteile zusammenfassenden, in den Figuren 7 bis 13 dargestellten Träger 13 gelagerten dritten Zapfen 53 die beiden Verriegelungselemente 301, 30r einer Verriegelungseinheit 29 und das an dem Verriegelungselement 30r beweglich angebrachte Arretierelement 51. Die Verriegelungselemente 301, 30r werden mittels beidseitig der zweiten Drehachse 22 angeordneter vierter Zapfen 541, 54r gesteuert. Die vierten Zapfen 541, 54r wirken mit den ersten Führungen 341, 34r der Verriegelungselemente 301, 30r zusammen. Der Stellhebel 36 ist mit einem fünften Zapfen 55 versehen, welcher in einer nicht dargestellten kulissenartigen Führung geführt ist und mittels dessen der Verriegelungseinheit 29 und dem Arretierelement 51 die Bewegungen in den verschiedenen Bewegungsphasen mittelbar über den Stellhebel 36 aufgeprägt wird. Mittels einer zweiten Ausformung 52 an dem Stellhebel 36 findet in einer Bewegungsphase die Krafteinleitung auf das Arretierelement 51 mittels des dritten Zapfens 53 statt.

Figur 6 zeigt einen Querschnitt durch eine erfindungsgemäße Kartenaufnahmevorrichtung 1 in einer Bewegungsphase, bei welcher sich die eingeführte Karte 2 kurz vor einem endseitig des Aufnahmeschachtes 40 angeordneten Anschlag 41 befindet. Kontakte 56 eines Kontaktsatzes 57 befinden sich bereits kurz vor ihrer Kontaktierung in einer endgültigen Datenübertragungsposition an einer Flachseite der Karte 2.

Während der in Figur 7 dargestellten Bewegungsphase einer Karte 2 in einer erfindungsgemäßen Kartenaufnahmevorrichtung 1 ist die, die Verriegelungselemente 301, 30r umfassende Verriegelungseinheit 29 vollständig geöffnet. Im Rahmen der Einführbewegung gleitet die Karte 2 entlang der beidseitig jeweils an den Verriegelungselementen 301, 30r vorgesehenen Einlaufschrägen 481, 48r in das Innere der Kartenaufnahmevorrichtung 1. Dort wird die Karte 2 von einer nicht dargestellten Klemmeinheit erfasst und entlang einer Einschubebene 4 in Einschubrichtung 9 transportiert. Die Karte 2 wird hierbei durch eine nicht dargestellte Aufnahmeöffnung eingeführt, welche mittels eines Verschlusses 6 staubdicht und spritzwasserdicht verschließbar ist. Ein Verschlusselement 7 des Verschlusses 6 ist mittels einer zweiten Blattfeder 11 in Normalenrichtung der Einschubebene 4 federnd gelagert. Die zweite Blattfeder 11 ist hierbei Bestandteil eines zentralen Trägers 13, an welchem sämtliche funktionswesentlichen Bauteile der erfindungsgemäßen Kartenaufnahmevorrichtung 1 angebracht sind. Der Träger 13 ist ein mit Ausnehmungen versehenes Blechbauteil, welches in Outserttechnik mit angespritzten Kunststoffteilen versehen ist.

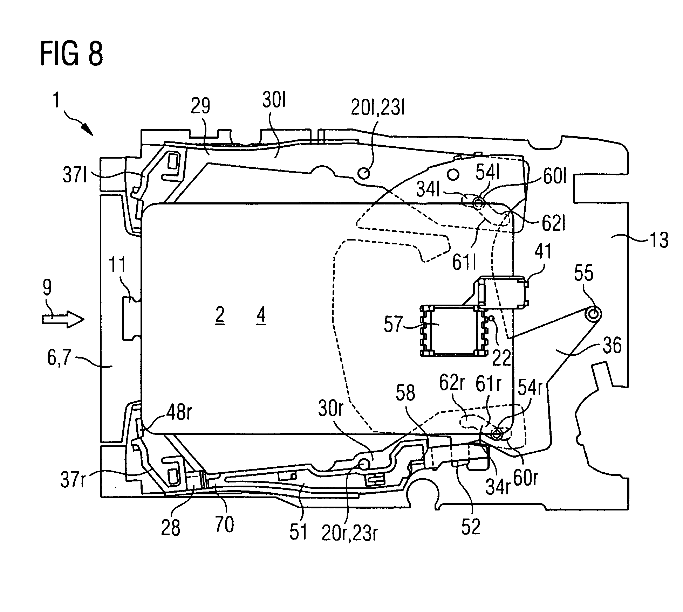

Während der in Figur 8 dargestellten Bewegungsphase befindet sich die Karte 2 kurz vor einem Anschlag 41, welcher fester Bestandteil des Kontaktsatzes 57 ist. Eine in Richtung des rechts angeordneten Verriegelungselementes 30r gerichtete Kraft an dem fünften Zapfen 55 bewirkt eine Drehung des Stellhebels 36 in mathematisch positive Richtung, so dass sich bereits die vierten Zapfen 541, 54r um die zweite Drehachse 22 in den ersten Führungen 341, 34r der Verriegelungselemente 301, 30r bewegen. Die ersten Führungen 341, 34r sind zu der zweiten Drehachse 22 des Stellhebels 36 in einem in diesem Bewegungsabschnitt von den ersten Zapfen 441, 44r durchlaufenen ersten Bereich 601, 60r um die zweite Drehachse 22 konzentrisch ausgebildet, so dass die Bewegung des Stellhebels 36 keine Rotationsbewegung der Verriegelungselemente 301, 30r in dieser Bewegungsphase zur Folge hat.

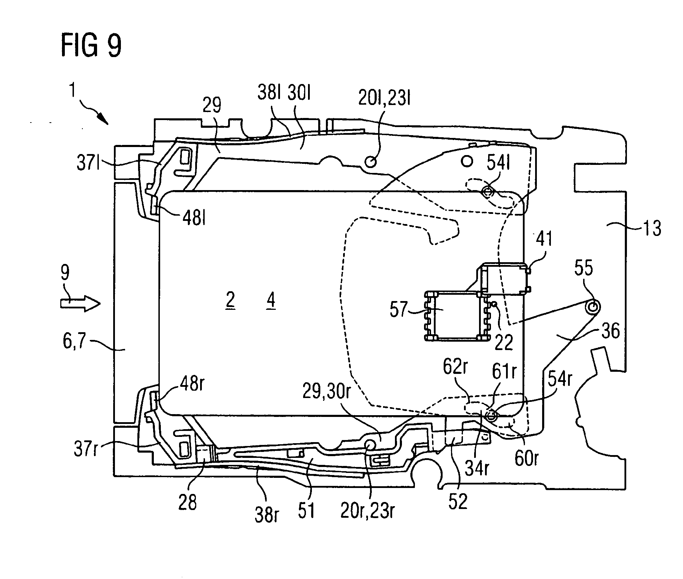

Während der in Figur 9 dargestellten Bewegungsphase der Karte in der erfindungsgemäßen Kartenaufnahmevorrichtung 1 ist die Karte 2 an den Anschlag 41 des Kontaktsatzes 57 angestoßen, die vierten Zapfen 541, 54r des Stellhebels 36 haben den um die zweite Drehachse 22 konzentrisch ausgebildeten ersten Bereich der ersten Führungen 341, 34r verlassen und durchlaufen einen zweiten Bereich 611, 61r der ersten Führungen 341, 34r der nicht konzentrisch zu der zweiten Drehachse 22 ausgebildet ist, so dass sich die Verriegelungselemente 301, 30r um die ersten Drehachsen 201, 20r drehen. Gleichzeitig mit dem Erreichen des Anschlages 41 des Kontaktsatzes 57 durch die Karte 2 wird die Klemmung der Karte 2 gelöst, so dass die Verriegelungseinheit 29 mittels der Anlagestücke 371, 37r die Karte feinpositionieren kann. Die Anlagestücke 371, 37r rücken von beiden Seiten gegenläufig in den Bereich der nicht dargestellten Aufnahmeöffnung der Kartenaufnahmevorrichtung 1 ein.

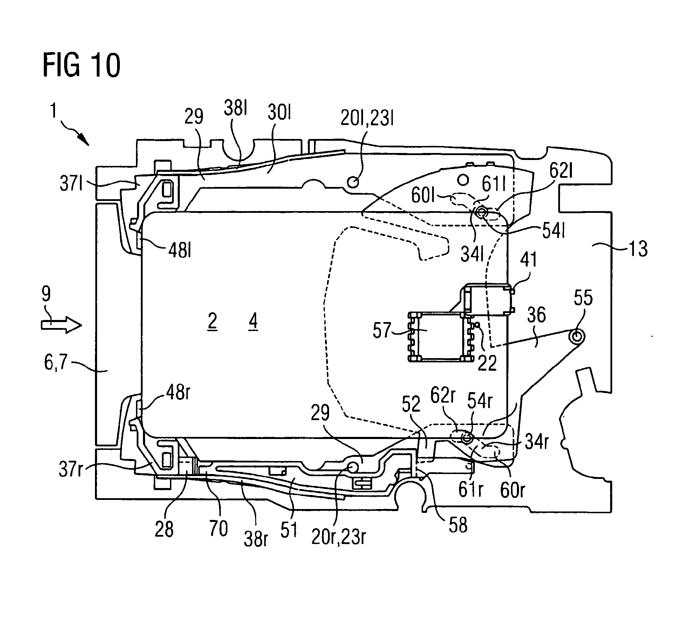

Eine fortgesetzte Krafteinleitung an dem fünften Zapfen 55 des Stellhebels 36 hat zur Folge, dass während der in Figur 10 dargestellten Bewegungsphase der Karte 2 in der Kartenaufnahmevorrichtung 1 der Verriegelungsprozess nahezu zum Ende gekommen ist. In einem dritten Bereich 621, 62r sind die ersten Führungen 341, 34r der Verriegelungselemente 301, 30r wie in dem ersten Bereich konzentrisch um die zweite Drehachse 22 des Stellhebels 36 ausgebildet, so dass trotz einer Drehbewegung des Stellhebels 36 keine Drehbewegung der Verriegelungselemente 301, 30r erfolgt. Die zweite Ausformung 52 des Stellhebels 36 berührt in der dargestellten Bewegungsphase das Arretierelement 51 an einer Kontaktfläche 58.

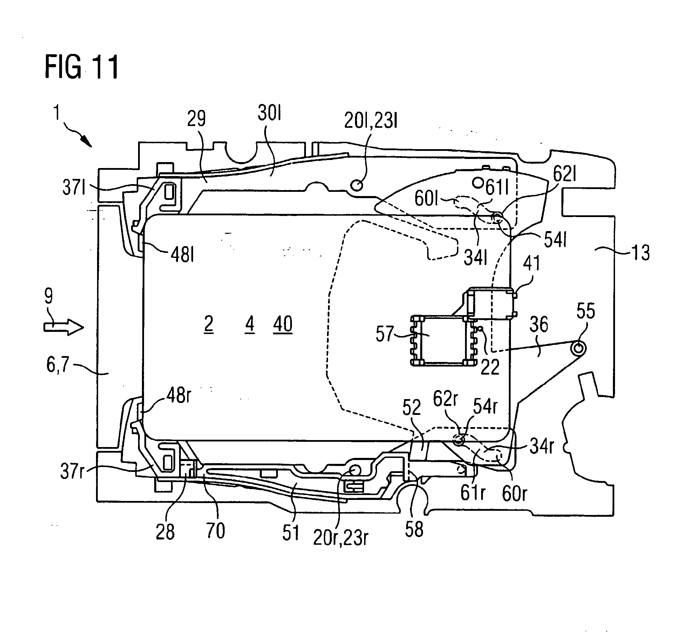

Während der in Figur 11 dargestellten Bewegungsphase schiebt die erste Ausformung 70 das verjüngt ausgebildete aufnahmeöffnungsseitige Ende des Arretierelements 51 hinter eine entsprechende Ausnehmung 28 des Anlagestücks 37r, so dass das Anlagestück 37r in seiner Beweglichkeit eingeschränkt ist.

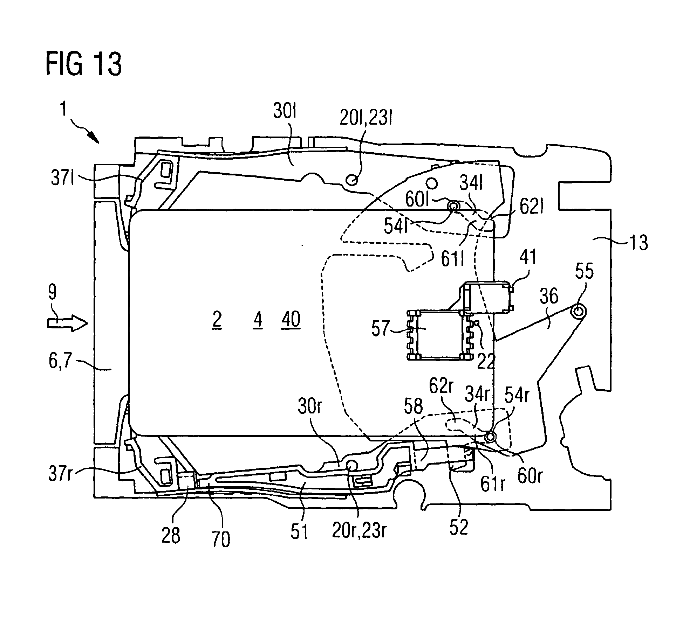

Eine Umkehr der Krafteinleitung auf den fünften Zapfen 55 des Stellhebels 36 hat eine Umkehr der Drehung des Stellhebels 36 um die zweite Drehachse 22 zur Folge, so dass die vierten Zapfen 541, 54r entlang der ersten Führungen 341, 34r von dem dritten Bereich in Richtung des ersten Bereiches verfahren, so dass sich die Verriegelungselemente 301, 30r von der "Geschlossen-Stellung" in die ursprüngliche "Geöffnet-Stellung" bewegen. Das Arretierelement 51 verbleibt zunächst in der "Arretiert-Stellung" und wird erst während der in Figur 13 dargestellten Bewegungsphase aus dieser Stellung entfernt, wenn die zweite Ausformung 52 den dritten Zapfen 53 erreicht und mitnimmt. Auf diese Weise wird der Bewegung des Arretierelements 51 im Rahmen der Aufnahmebewegung und Ausgabebewegung der Kartenaufnahmevorrichtung 1 ein Hystereseverhalten aufgeprägt.

## Patentansprüche

1. Kartenaufnahmevorrichtung (1), insbesondere für einen Fahrtenschreiber in einem Kraftfahrzeug in Flachbauweise, welche eine Karte (2) vollständig ins Innere einzieht, mit einer länglichen Aufnahmeöffnung, durch welche die Karte (2) in einer Einschubrichtung (9) in die Kartenaufnahmevorrichtung (1) gelangt und mit einer Verriegelungseinheit (29), welche mindestens ein Verriegelungselement (30r, 301) aufweist, das in den lichten Querschnitt der Aufnahmeöffnung bewegbar ist, **dadurch gekennzeichnet, dass** das Verriegelungselement (30r, 301) mindestens eine Anlagefläche (39r, 391) aufweist, welche die in der Kartenaufnahmevorrichtung (1) befindliche Karte (2) an der nach außen weisenden Stirnseite (31) oder im Bereich einer an dieser Stirnseite (31) angrenzenden Ecke oder Rundung der Karte (2) berührt und zumindest zeitweise in Einschubrichtung (9) drückt.

2. Kartenaufnahmevorrichtung (1) nach Anspruch 1,
**dadurch gekennzeichnet , dass** sich die Karte (2) im Wesentlichen in einer Einschubebene (4) in Einschubrichtung (9) bewegt.

3. Kartenaufnahmevorrichtung (1) nach mindestens einem der vorhergehenden Ansprüche, **dadurch gekennzeichnet , dass** das Verriegelungselement (30r, 30l) um eine erste Drehachse (20r, 20l) drehbar gelagert ist.

4. Kartenaufnahmevorrichtung (1) nach Anspruch 2,
**dadurch gekennzeichnet , dass** die erste Drehachse (20r, 201) senkrecht zur Einschubebene (4) der Karte (2) verläuft.

5. Kartenaufnahmevorrichtung (1) nach mindestens einem der vorhergehenden Ansprüche, **dadurch gekennzeichnet, dass** die Kartenaufnahmevorrichtung (1) eine kulissenartige erste Führung (34r, 34l) aufweist und das Verriegelungselement (30r, 30l) ein erstes Führungselement (35r, 35l) in der Art eines Kulissensteins aufweist, das Verriegelungselement (30r, 30l) mittels der ersten Führung (35r, 35l) und des ersten Führungselements (35r, 35l) in eine Verriegelungsposition und aus der Verriegelungsposition heraus bewegbar ist, insbesondere um eine erste Drehachse (20r, 20l) verschwenkbar ist.

6. Kartenaufnahmevorrichtung (1) nach mindestens einem der vorhergehenden Ansprüche, **dadurch gekennzeichnet, dass** die kulissenartige erste Führung (34r, 34l) Bestandteil eines um eine zweite Drehachse (20r, 20l) drehbaren Stellhebels (36) ist.

7. Kartenaufnahmevorrichtung (1) nach mindestens einem der vorhergehenden Ansprüche, **dadurch gekennzeichnet , dass** das Verriegelungselement (30r, 30l) ein an diesem beweglich angebrachtes Anlagestück (37r, 37l) aufweist, welches an der Karte (2) an der nach außen weisenden Stirnseite (31) oder im Bereich einer an dieser Stirnseite angrenzenden Ecke (32) oder Rundung der Karte (2) zumindest zeitweise anliegt und zumindest zeitweise die Karte (2) in Einschubrichtung (9) drückt.

8. Kartenaufnahmevorrichtung (1) nach Anspruch 7,
**dadurch gekennzeichnet , dass** das Anlagestück (37r, 37l) an dem Verriegelungselement (30r, 30l) federnd gelagert ist.

9. Kartenaufnahmevorrichtung (1) nach mindestens einem der Ansprüche 7 oder 8, **dadurch gekennzeichnet , dass** das Anlagestück mittels einer ersten Blattfeder (38l, 38r) federnd gelagert ist.

10. Kartenaufnahmevorrichtung (1) nach mindestens einem der Ansprüche 7 oder 9, **dadurch gekennzeichnet, dass** das Anlagestück (37r, 37l) im Wesentlichen tangential oder unter einen flachen Winkel zur Umfangsrichtung der ersten Drehachse (20r, 20l) des Verriegelungselementes (30r, 30l) beweglich an dem Verriegelungselement (30r, 30l) gelagert ist.

11. Kartenaufnahmevorrichtung (1) nach mindestens einem der Ansprüche 7 bis 10, **dadurch gekennzeichnet, dass** eine Anlagefläche (39r, 391) an dem Anlagestück (37r, 37l) schräg zu der Relativbeweglichkeitsrichtung des Anlagestücks (37r, 37l) zu dem Verriegelungselement (30r, 30l) orientiert ist, welche an der Karte (2) an einer nach außen weisenden Ecke (32) oder Rundung während einer Phase der Einwärtsbewegung anliegt.

12. Kartenaufnahmevorrichtung (1) nach mindestens einem der vorhergehenden Ansprüche, **dadurch gekennzeichnet , dass** an mindestens einem Verriegelungselement (30r, 30l) ein Arretierelement (51) angebracht ist, welches in eine "Arretiert-Stellung" bewegbar ist und die Verriegelungseinheit (29) in einer "Verriegelt-Stellung" arretiert.

13. Kartenaufnahmevorrichtung (1) nach Anspruch 12,
**dadurch gekennzeichnet , dass** genau an einem Verriegelungselement (30r, 30l) ein Arretierelement (51) angebracht ist.

14. Kartenaufnahmevorrichtung (1) nach mindestens einem der Ansprüche 12 oder 13 und mindestens einem der Ansprüche 7 bis 9, **dadurch gekennzeichnet , dass** das Arretierelement (51) die Beweglichkeit des Anlagestücks (37r, 37l) in der "Arretiert-Stellung" einschränkt.

15. Kartenaufnahmevorrichtung (1) nach Anspruch 14,
**dadurch gekennzeichnet , dass**, das Anlagestück (37r, 37l) zu dem Arretierelement (51) in der "Arretiert-Stellung" so viel Spiel hat, dass es im Rahmen der Breiten-, Längen- und Formtoleranz der Karte (2) federnd beweglich ist und das Anlagestück (37r, 37l) zu dem Arretierelement (51) in der "Arretiert-Stellung" so wenig Spiel hat, dass die lichte Weite der Aufnahmeöffnung so weit versperrt ist, dass die Karte (2) nicht entnehmbar ist.

16. Kartenaufnahmevorrichtung (1) nach mindestens einem der Ansprüche 14, 15,- **dadurch gekennzeichnet, dass** das Arretierelement (51) an dem Verriegelungselement (30r, 30l) beweglich angebracht ist.

17. Kartenaufnahmevorrichtung (1) nach mindestens einem der Ansprüche 14 bis 16, **dadurch gekennzeichnet, dass** das Arretierelement (51) relativ zu dem Verriegelungselement (30r, 30l) translatorisch beweglich und an dem Verriegelungselement (30r, 30l) gleitgelagert ist.

18. Kartenaufnahmevorrichtung (1) nach mindestens einem der Ansprüche 14 bis 17, **dadurch gekennzeichnet, dass** das Arretierelement (51) mittels eines Stellhebels (36) steuerbar und bewegbar ist.

19. Kartenaufnahmevorrichtung (1) nach mindestens einem der vorhergehenden Ansprüche, **dadurch gekennzeichnet, dass** sie zwei an einer senkrecht zur Einschubebene (4) orientierten Mittelebene eines Aufnahmeschachtes (40) spiegelbildlich zueinander und seitlich des Aufnahmeschachtes (40) angeordnete Verriegelungselemente (30r, 30l) aufweist.

20. Kartenaufnahmevorrichtung (1) nach mindestens einem der vorhergehenden Ansprüche, **dadurch gekennzeichnet, dass** die Kartenaufnahmevorrichtung (1) einen Anschlag (41) für die Karte (2) am Ende eines Aufnahmeschachtes (40) aufweist.

21. Kartenaufnahmevorrichtung (1) nach mindestens einem der vorhergehenden Ansprüche, **dadurch gekennzeichnet, dass** die Karte (2) in der Endposition mittels eines elastischen Elements permanent gegen den Anschlag (41) gedrückt wird.

22. Kartenaufnahmevorrichtung (1) nach mindestens einem der Ansprüche 7 bis 9 und mindestens einem der Ansprüche 20, 21, **dadurch gekennzeichnet , dass** die Karte (2) in der Endposition mittels des Anlagestücks (37r, 37l) permanent gegen den Anschlag (41) gedrückt wird.

23. Kartenaufnahmevorrichtung (1) nach mindestens einem der Ansprüche 20 bis 22, **dadurch gekennzeichnet, dass** der Anschlag (41) an einem Kontaktsatz (57) befestigt ist.

24. Kartenaufnahmevorrichtung (1) nach Anspruch 23,
**dadurch gekennzeichnet , dass** die Kartenaufnahmevorrichtung (1) einen Verschluss (6) aufweist, welcher sich in Längsrichtung der Aufnahmeöffnung erstreckt und in der "Geschlossen-Stellung" des Verschlusses (6) die Aufnahmeöffnung versperrt.

25. Kartenaufnahmevorrichtung (1) nach mindestens einem der Ansprüche 23, 24, **dadurch gekennzeichnet, dass** das Verschlusselement (7) im Rahmen des für die Aufnahme der Karte (2) erforderlichen Hubes in Normalenrichtung der Einschubebene (4) bewegbar ist.

26. Kartenaufnahmevorrichtung (1) nach mindestens einem der Ansprüche 23 bis 25, **dadurch gekennzeichnet, dass** das Verschlusselement (7) an der Kartenaufnahmevorrichtung (1) mittels mindestens eines elastischen Elements federnd gelagert ist.

27. Kartenaufnahmevorrichtung (1) nach Anspruch 26,
**dadurch gekennzeichnet , dass** das elastische Element eine zweite Blattfeder (11) ist und die zweite Blattfeder (11) mittels des Verriegelungselements (30r, 30l) der Verriegelungseinheit (29) in der "Geschlossen-Stellung" des Verschlusses (6) blockierbar ist.

28. Kartenaufnahmevorrichtung (1) nach mindestens einem der Ansprüche 23 bis 27, **dadurch gekennzeichnet , dass** das Verschlusselement (7) an mindestens einer zweiten Blattfeder (11) einstückig angebracht ist.

29. Kartenaufnahmevorrichtung (1) nach mindestens einem der Ansprüche 23 bis 28, **dadurch gekennzeichnet, dass** das Verschlusselement (7) im Rahmen des für die Aufnahme der Karte (2) erforderlichen Hubes in Normalenrichtung der Einschubebene (4) federnd gelagert ist.

30. Kartenaufnahmevorrichtung (1) nach mindestens einem der vorhergehenden Ansprüche 23 bis 29, **dadurch gekennzeichnet, dass** der Verschluss (6) in der "Geschlossen-Stellung" mittels der Verriegelungseinheit (29) verriegelbar ist.

31. Kartenaufnahmevorrichtung (1) nach mindestens einem der vorhergehenden Ansprüche, **dadurch gekennzeichnet, dass** das Verriegelungselement (30r, 30l) der Verriegelungseinheit (29) in einer im Wesentlichen zu der sich in der Kartenaufnahmevorrichtung (1) bewegenden Karte (2) parallelen Ebene bewegbar ist, insbesondere drehbar ist.

32. Kartenaufnahmevorrichtung (1) nach mindestens einem der vorhergehenden Ansprüche, **dadurch gekennzeichnet , dass** die Karte (2) automatisch einziehbar ist.

33. Kartenaufnahmevorrichtung (1) nach mindestens einem der vorhergehenden Ansprüche, **dadurch gekennzeichnet , dass** die Karte (2) automatisch ausgebbar ist.

34. Kartenaufnahmevorrichtung (1) nach mindestens einem der vorhergehenden Ansprüche, **dadurch gekennzeichnet, dass** die Kartenaufnahmevorrichtung (1) einen Kontaktsatz (57) zum Kontaktieren der Karte (2) aufweist.

35. Verfahren zur Aufnahme einer Karte (2) in eine Kartenaufnahmevorrichtung (1), insbesondere für einen Fahrtenschreiber in einem Kraftfahrzeug in Flachbauweise, welche eine Karte (2) in einer Einschubebene (4) vollständig einzieht, mit einer länglichen Aufnahmeöffnung, durch welche die Karte (2) in einen Aufnahmeschacht (40) der Kartenaufnahmevorrichtung (1) gelangt und mit einer Verriegelungseinheit (29), welche mindestens ein Verriegelungselement (30r, 301) aufweist, das in den lichten Querschnitt der Aufnahmeöffnung bewegbar ist, **dadurch gekennzeichnet, dass** das Verriegelungselement (30r, 30l) die in der Kartenaufnahmevorrichtung (1) befindliche Karte (2) an der nach außen weisenden Stirnseite (31) oder im Bereich einer an dieser Stirnseite (31) angrenzenden Ecke (32) oder Rundung der Karte (2) zeitweise anliegt und zumindest zeitweise die Karte (2) in Einschubrichtung (9) drückt.

36. Verfahren nach Anspruch 35, **dadurch gekennzeichnet, dass** das Verriegelungselement (30r, 30l) die Karte (2) während Schreibvorgängen und/oder Lesevorgängen permanent an einen Anschlag (41) drückt.

37. Verfahren nach Anspruch 35, **dadurch gekennzeichnet , dass** in einem ersten Schritt eine Klemmeinheit die Karte (2) klemmt, in einem zweiten Schritt die Karte (2) in die Kartenaufnahmevorrichtung (1) transportiert wird in einem dritten Schritt die Klemmung der Klemmeinheit von der Karte (2) gelöst wird und in einem vierten Schritt die Verriegelungseinheit (29) die Karte (2) an eine Endposition schiebt.

38. Verfahren nach Anspruch 35, **dadurch gekennzeichnet , dass** in einem vierten Schritt die Verriegelungseinheit (29) die Karte (2) an eine Endposition schiebt in welcher erste Kontakte (56) eines Kontaktsatzes (57) mit Kontaktflächen der Karte (2) in Verbindung stehen.

39. Verfahren nach Anspruch 35, **dadurch gekennzeichnet, dass** in einem fünften Schritt Informationen aus der Karte (2) ausgelesen oder in der Karte (2) abgelegt werden.

## Claims

1. Card receiving device (1), in particular a flat card receiving device for a tachograph in a motor vehicle, which card receiving device draws a card (2) completely into its interior, has an elongate receiving opening through which the card (2) passes into the card receiving device (1) in an insertion direction (9), and has a locking unit (29) which has at least one locking element (30r, 301) which can be moved into the clear cross section of the receiving opening, **characterized in that** the locking element (30r, 30l) has at least one abutment area (39r, 39l) which touches the card (2) located in the card receiving device (1) at the outwardly pointing end face (31) or in the region of a corner or rounded section of the card (2) which adjoins this end face (31), and at least temporarily presses said card in the insertion direction (9).

2. Card receiving device (1) according to Claim 1, **characterized in that** the card (2) moves in the insertion direction (9) essentially in an insertion plane (4).

3. Card receiving device (1) according to at least one of the preceding claims, **characterized in that** the locking element (30r, 30l) is rotatably mounted about a first rotation axis (20r, 20l).

4. Card receiving device (1) according to Claim 2, **characterized in that** the first rotation axis (20r, 20l) runs perpendicular to the insertion plane (4) of the card (2).

5. Card receiving device (1) according to at least one of the preceding claims, **characterized in that** the card receiving device (1) has a slotted-link-like first guide (34r, 341), and the locking element (30r, 30l) has a first guide element (35r, 35l) in the form of a sliding block, the locking element (30r, 30l) can be moved into a locking position and out of the locking position by means of the first guide (34r, 34l) and the first guide element (35r, 35l), in particular can be pivoted about a first rotation axis (20r, 20l).

6. Card receiving device (1) according to at least one of the preceding claims, **characterized in that** the slotted-link-like first guide (34r, 34l) is a constituent part of an actuating lever (36) which can be rotated about a second rotation axis (20r, 20l).

7. Card receiving device (1) according to at least one of the preceding claims, **characterized in that** the locking element (30r, 30l) has an abutment piece (37r, 37l) which is movably fitted to said locking element, at least temporarily bears against the card (2) at the outwardly pointing end face (31) or in the region of a corner (32) or rounded section of the card (2) which adjoins this end face, and at least temporarily presses the card (2) in the insertion direction (9).

8. The card receiving device (1) according to Claim 7, **characterized in that** the abutment piece (37r, 37l) is spring-mounted on the locking element (30r, 30l).

9. The card receiving device (1) according to at least one of Claims 7 and 8, **characterized in that** the abutment piece is spring-mounted by means of a first leaf spring (38l, 38r).

10. The card receiving device (1) according to at least one of Claims 7 and 9, **characterized in that** the abutment piece (37r, 37l) is movably mounted on the locking element (30r, 30l) essentially tangentially or at an acute angle to the circumferential direction of the first rotation axis (20r, 20l) of the locking element (30r, 30l).

11. The card receiving device (1) according to at least one of Claims 7 to 10, **characterized in that** an abutment area (39r, 39l) on the abutment piece (37r, 37l) is oriented obliquely to the direction of movement of the abutment piece (37r, 37l) in relation to the locking element (30r, 30l), said abutment area bearing against the card (2) at an outwardly pointing corner (32) or rounded section during an inward-movement phase.

12. The card receiving device (1) according to at least one of the preceding claims, **characterized in that** an arresting element (51) is fitted to at least one locking element (30r, 30l), can be moved to an "arrested position", and arrests the locking unit (29) in a "locked position".

13. The card receiving device (1) according to Claim 12, **characterized in that** an arresting element (51) is fitted precisely to a locking element (30r, 30l).

14. The card receiving device (1) according to at least one of Claims 12 and 13 and at least one of Claims 7 to 9, **characterized in that** the arresting element (51) restricts the mobility of the abutment piece (37r, 37l) in the "arrested position".

15. The card receiving device (1) according to Claim 14, **characterized in that** the abutment piece (37r, 37l) has so much play with respect to the arresting element (51) in the "arrested position" that it can move in a sprung manner within tolerances of the card (2) to width, length and form, and the abutment piece (37r, 37l) has so little play with respect to the arresting element (51) in the "arrested position" that the clear width of the receiving opening is blocked to such an extent that the card (2) cannot be removed.

16. The card receiving device (1) according to at least one of Claims 14 and 15, **characterized in that** the arresting element (51) is movably fitted to the locking element (30r, 30l).

17. The card receiving device (1) according to at least one of Claims 14 to 16, **characterized in that** the arresting element (51) can move in a translatory fashion in relation to the locking element (30r, 30l) and is mounted on the locking element (30r, 30l) such that it can slide.

18. The card receiving device (1) according to at least one of Claims 14 to 17, **characterized in that** the arresting element (51) can be controlled and moved by means of an actuating lever (36).

19. The card receiving device (1) according to at least one of the preceding claims, **characterized in that** said card receiving device has two locking elements (30r, 30l) which are arranged in mirror-image fashion with respect to one another on a middle plane of a receiving shaft (40) which is oriented perpendicular to the insertion plane (4), and at the side of the receiving shaft (40).

20. The card receiving device (1) according to at least one of the preceding claims, **characterized in that** the card receiving device (1) has a stop (41) for the card (2) at the end of a receiving shaft (40).

21. The card receiving device (1) according to at least one of the preceding claims, **characterized in that** the card (2) is permanently pressed against the stop (41) in the end position by means of an elastic element.

22. The card receiving device (1) according to at least one of Claims 7 to 9 and at least one of Claims 20 and 21, **characterized in that** the card (2) is permanently pressed against the stop (41) in the end position by means of the abutment piece (37r, 37l).

23. The card receiving device (1) according to at least one of Claims 20 to 22, **characterized in that** the stop (41) is fixed to a set (57) of contacts.

24. The card receiving device (1) according to Claim 23, **characterized in that** the card receiving device (1) has a closure means (6) which extends in the longitudinal direction of the receiving opening and blocks the receiving opening in the "closed position" of the closure means (6).

25. The card receiving device (1) according to at least one of Claims 23 and 24, **characterized in that** the closure element (7) can be moved in the normal direction of the insertion plane (4) for the travel required to receive the card (2).

26. The card receiving device (1) according to at least one of Claims 23 to 25, **characterized in that** the closure element (7) is spring-mounted on the card receiving device (1) by means of at least one elastic element.

27. The card receiving device (1) according to Claim 26, **characterized in that** the elastic element is a second leaf spring (11), and the second leaf spring (11) can be blocked in the "closed position" of the closure means (6) by means of the locking element (30r, 30l) of the locking unit (29).

28. The card receiving device (1) according to at least one of Claims 23 to 27, **characterized in that** the closure element (7) is integrally fitted to at least one second leaf spring (11).

29. The card receiving device (1) according to at least one of Claims 23 to 28, **characterized in that** the closure element (7) is spring-mounted in the normal direction of the insertion plane (4) for the travel required to receive the card (2).

30. The card receiving device (1) according to at least one of the preceding Claims 23 to 29, **characterized in that** the closure means (6) can be locked in the "closed position" by means of the locking unit (29).

31. The card receiving device (1) according to at least one of the preceding claims, **characterized in that** the locking element (30r, 30l) of the locking unit (29) can be moved, particularly rotated, in a plane essentially parallel to the card (2) moving in the card receiving device (1).

32. The card receiving device (1) according to at least one of the preceding claims, **characterized in that** the card (2) can be automatically drawn in.

33. The card receiving device (1) according to at least one of the preceding claims, **characterized in that** the card (2) can be automatically ejected.

34. The card receiving device (1) according to at least one of the preceding claims, **characterized in that** the card receiving device (1) has a set (57) of contacts for making contact with the card (2).

35. Method for receiving a card (2) in a card receiving device (1), in particular a flat card receiving device for a tachograph in a motor vehicle, which card receiving device draws a card (2) completely into an insertion plane (4), has an elongate receiving opening through which the card (2) passes into a receiving shaft (40) of the card receiving device (1), and has a locking unit (29) which has at least one locking element (30r, 301) which can be moved into the clear cross section of the receiving opening, **characterized in that** the locking element (30r, 30l) temporarily bears on the card (2) located in the card receiving device (1) at the outwardly pointing end face (31) or in the region of a corner (32) or rounded section of the card (2) which adjoins this end face (31), and at least temporarily presses the card (2) in the insertion direction (9).

36. Method according to Claim 35, **characterized in that** the locking element (30r, 30l) permanently presses the card (2) against a stop (41) during writing operations and/or reading operations.

37. Method according to Claim 35, **characterized in that** a clamping unit clamps the card (2) in a first step, the card (2) is transported into the card receiving device (1) in a second step, the clamping action of the clamping unit is released from the card (2) in a third step, and the locking unit (29) pushes the card (2) to an end position in a fourth step.

38. Method according to Claim 35, **characterized in that**, in a fourth step, the locking unit (29) pushes the card (2) to an end position in which first contacts (56) of a set (57) of contacts are connected to contact areas on the card (2).

39. Method according to Claim 35, **characterized in that** information is read from the card (2) or stored in the card (2) in a fifth step.

## Revendications

1. Dispositif de réception de cartes à puce (1), notamment pour un tachygraphe de format plat dans un véhicule automobile, le dit dispositif absorbant complètement une carte à puce (2) dans son intérieur, comportant une ouverture de réception de forme allongée, à travers laquelle la carte à puce (2) parvient, dans une direction d'insertion (9), dans le dispositif de réception de cartes à puce (1), et ayant une unité de verrouillage (29) qui comporte au moins un organe de verrouillage (30r, 30l) mobile dans la section transversale intérieure de l'ouverture de réception, **caractérisé par le fait que** l'organe de verrouillage (30r, 30l) comporte au moins une surface d'appui (39r, 391), qui est en contact avec la carte (2) se trouvant dans le dispositif de réception de cartes à puce (1) sur sa face de tranche (31) tournée vers l'extérieur ou dans la zone d'un coin ou d'un arrondissement de la carte (2) voisins de cette face de tranche (31) et qui appuie, au moins temporairement, sur la carte dans la direction d'insertion (9).

2. Dispositif de réception de cartes à puce (1) selon la revendication 1, **caractérisé par le fait que** la carte (2) se déplace dans la direction d'insertion (9), pour l'essentiel, dans un plan d'insertion (4).

3. Dispositif de réception de cartes à puce (1) selon au moins l'une des revendications précédentes, **caractérisé par le fait que** l'organe de verrouillage (30r, 30l) est suspendu en rotation autour d'un premier axe de rotation (20r, 20l).

4. Dispositif de réception de cartes à puce (1) selon la revendication 2, **caractérisé par le fait que** le premier axe de rotation (20r, 20l) est perpendiculaire au plan d'insertion (4) de la carte (2).

5. Dispositif de réception de cartes à puce (1) selon au moins l'une des revendications précédentes, **caractérisé par le fait que** le dispositif de réception de cartes à puce (1) comporte un premier système de guidage (34r, 34l) du type à coulisse et que l'organe de verrouillage (30r, 301) comporte un premier organe de guidage (35r, 35l) dans le genre d'un coulisseau, que l'organe de verrouillage (30r, 30l) peut être, au moyen du premier système de guidage (35r, 35l) et du premier organe de guidage (35r, 35l), amené dans une position de verrouillage et dégagé de la position de verrouillage, notamment, en pivotant autour d'un premier axe de rotation (20r, 20l).

6. Dispositif de réception de cartes à puce (1) selon au moins l'une des revendications précédentes, **caractérisé par le fait que** le premier système de guidage (34r, 34l) du type à coulisse fait partie intégrante d'un levier de commande (36) pivotant autour d'un deuxième axe de rotation (20r, 20l).

7. Dispositif de réception de cartes à puce (1) selon au moins l'une des revendications précédentes, **caractérisé par le fait que** l'organe de verrouillage (30r, 30l) comporte une pièce d'appui (37r, 37l) montée mobile sur ce dernier, laquelle est appliquée, au moins temporairement, sur la carte (2) sur sa face de tranche (31) tournée vers l'extérieur ou dans la zone d'un coin (32) ou d'un arrondissement de la carte (2) voisins de cette face de tranche et qui appuie, au moins temporairement, sur la carte (2) dans la direction d'insertion (9).

8. Dispositif de réception de cartes à puce (1) selon la revendication 7, **caractérisé par le fait que** la pièce d'appui (37r, 37l) est suspendue d'une façon élastique sur l'organe de verrouillage (30r, 30l).

9. Dispositif de réception de cartes à puce (1) selon au moins l'une des revendications 7 ou 8, **caractérisé par le fait que** la pièce d'appui est suspendue d'une façon élastique au moyen d'un premier ressort à lame (38l, 38r).

10. Dispositif de réception de cartes à puce (1) selon au moins l'une des revendications 7 ou 9, **caractérisé par le fait que** la pièce d'appui (37r, 37l) est suspendue, pour l'essentiel, mobile sur l'organe de verrouillage (30r, 30l) et d'une façon tangentielle ou sous un angle plan par rapport à la circonférence du premier axe de rotation (20r, 20l) de l'organe de verrouillage (30r, 30l).

11. Dispositif de réception de cartes à puce (1) selon au moins l'une des revendications 7 à 10, **caractérisé par le fait qu**'une surface d'appui (39r, 391) sur la pièce d'appui (37r, 37l) est orientée en biais par rapport à la direction de mobilité relative de la pièce d'appui (37r, 371) par rapport à l'organe de verrouillage (30r, 30l), la dite surface d'appui s'appliquant, pendant une phase du déplacement vers l'intérieur, sur la carte (2) sur un coin (32) ou sur un arrondissement tournés vers l'extérieur.

12. Dispositif de réception de cartes à puce (1) selon au moins l'une des revendications précédentes, **caractérisé par le fait que**, sur au moins un organe de verrouillage (30r, 30l), est monté un organe de blocage (51) qui peut être amené dans une "position bloquée" et qui bloque l'unité de verrouillage (29) dans une "position verrouillée".

13. Dispositif de réception de cartes à puce (1) selon la revendication 12, **caractérisé par** l**e fait qu**'un organe de blocage (51) est monté sur exactement un organe de verrouillage (30r, 30l).

14. Dispositif de réception de cartes à puce (1) selon au moins l'une des revendications 12 ou 13 ou au moins l'une des revendications 7 à 9, **caractérisé par le fait que** l'organe de blocage (51) limite, dans la "position bloquée", la mobilité de la pièce d'appui (37r, 37l).

15. Dispositif de réception de cartes à puce (1) selon la revendication 14, **caractérisé par le fait que** la pièce d'appui (37r, 37l) a, dans la "position bloquée", suffisamment de jeu par rapport à l'organe de blocage (51) pour être mobile d'une façon élastique dans le cadre des tolérances de largeur, de longueur et de forme de la carte (2) et que la pièce d'appui (37r, 37l) a, dans la "position bloquée", suffisamment peu de jeu par rapport à l'organe de blocage (51) pour que la dimension intérieure de l'ouverture de réception soit suffisamment obturée pour empêcher une extraction de la carte (2).

16. Dispositif de réception de cartes à puce (1) selon au moins l'une des revendications 14, 15, **caractérisé par le fait que** l'organe de blocage (51) est monté mobile sur l'organe de verrouillage (30r, 30l).

17. Dispositif de réception de cartes à puce (1) selon au moins l'une des revendications 14 à 16, **caractérisé par le fait que** l'organe de blocage (51) est monté mobile en translation relativement à l'organe de verrouillage (30r, 30l) et est suspendu sur palier lisse sur l'organe de verrouillage (30r, 30l).

18. Dispositif de réception de cartes à puce (1) selon au moins l'une des revendications 14 à 17, **caractérisé par le fait que** l'organe de blocage (51) peut être commandé et déplacé au moyen d'un levier de commande (36).

19. Dispositif de réception de cartes à puce (1) selon au moins l'une des revendications précédentes, **caractérisé par le fait qu**'il comporte deux organes de verrouillage (30r, 30l) disposés, dans un sens opposé l'un par rapport à l'autre, sur un plan médian, orienté perpendiculairement au plan d'insertion (4), d'un logement de réception (40) et latéralement par rapport au logement de réception (40).

20. Dispositif de réception de cartes à puce (1) selon au moins l'une des revendications précédentes, **caractérisé par** l**e fait que** le dispositif de réception de cartes à puce (1) comporte, à l'extrémité d'un logement de réception (40), une butée (41) pour la carte (2).

21. Dispositif de réception de cartes à puce (1) selon au moins l'une des revendications précédentes, **caractérisé par le fait que** la carte (2) est, dans la position finale, poussée en permanence contre la butée (41) au moyen d'un organe élastique.

22. Dispositif de réception de cartes à puce (1) selon au moins l'une des revendications 7 à 9 et au moins l'une des revendications 20, 21, **caractérisé par** l**e fait que** la carte (2) est, dans la position finale, poussée en permanence contre la butée (41) au moyen de la pièce d'appui (37r, 37l).

23. Dispositif de réception de cartes à puce (1) selon au moins l'une des revendications 20 à 22, **caractérisé par le fait que** la butée (41) est fixée à un jeu de contacts (57) .

24. Dispositif de réception de cartes à puce (1) selon la revendication 23, **caractérisé par le fait que** le dispositif de réception de cartes à puce (1) comporte un obturateur (6), qui s'étend dans le sens longitudinal de l'ouverture de réception et, dans la "position fermée" de l'obturateur (6), ferme l'ouverture de réception.

25. Dispositif de réception de cartes à puce (1) selon au moins l'une des revendications 23, 24, **caractérisé par le fait que** l'organe d'obturation (7) est mobile dans un sens perpendiculaire au plan d'insertion (4) dans le cadre de la course nécessaire à la réception de la carte (2).

26. Dispositif de réception de cartes à puce (1) selon au moins l'une des revendications 23 à 25, **caractérisé par le fait que** l'organe d'obturation (7) est suspendu d'une façon élastique au dispositif de réception de cartes à puce (1) au moyen de au moins un organe élastique.

27. Dispositif de réception de cartes à puce (1) selon la revendication 26, **caractérisé par le fait que** l'organe élastique est un deuxième ressort à lame (11) et que le deuxième ressort à lame (11) peut être bloqué, dans la "position fermée" de l'obturateur (6), au moyen de l'organe de verrouillage (30r, 30l) de l'unité de verrouillage (29).

28. Dispositif de réception de cartes à puce (1) selon au moins l'une des revendications 23 à 27, **caractérisé par le fait que** l'organe d'obturation (7) est monté en une seule pièce sur au moins un deuxième ressort à lame (11).

29. Dispositif de réception de cartes à puce (1) selon au moins l'une des revendications 23 à 28, **caractérisé par le fait que** l'organe d'obturation (7) est suspendu d'une façon élastique dans un sens perpendiculaire au plan d'insertion (4) dans le cadre de la course nécessaire à la réception de la carte (2).

30. Dispositif de réception de cartes à puce (1) selon au moins l'une des revendications précédentes 23 à 29, **caractérisé par le fait que** l'obturateur (6) peut être verrouillé, dans la "position fermée", au moyen de l'unité de verrouillage (29).

31. Dispositif de réception de cartes à puce (1) selon au moins l'une des revendications précédentes, **caractérisé par** le f ait que l'organe de verrouillage (30r, 30l) de l'unité de verrouillage (29) est mobile, notamment rotative, dans un plan parallèle, pour l'essentiel, à la carte (2) se déplaçant dans le dispositif de réception de cartes à puce (1).

32. Dispositif de réception de cartes à puce (1) selon au moins l'une des revendications précédentes, **caractérisé par le fait que** la carte (2) peut être insérée automatiquement.

33. Dispositif de réception de cartes à puce (1) selon au moins l'une des revendications précédentes, **caractérisé par le fait que** la carte (2) peut être restituée automatiquement.

34. Dispositif de réception de cartes à puce (1) selon au moins l'une des revendications précédentes, **caractérisé par le fait que** le dispositif de réception de cartes à puce (1) comporte un jeu de contacts (57) destiné à établir le contact électrique avec la carte (2).

35. Procédé pour la réception d'une carte à puce (2) dans un dispositif de réception de cartes à puce (1), notamment pour un tachygraphe de format plat dans un véhicule automobile, le dit dispositif absorbant complètement la carte (2) dans un plan d'insertion (4), comportant une ouverture de réception de forme allongée, à travers laquelle la carte à puce (2) parvient dans un logement de réception (40) du dispositif de réception de cartes à puce (1), et ayant une unité de verrouillage (29) qui comporte au moins un organe de verrouillage (30r, 30l) mobile dans la section transversale intérieure de l'ouverture de réception, **caractérisé par le fait que** l'organe de verrouillage (30r, 301) est appliqué temporairement sur la carte (2) se trouvant dans le dispositif de réception de cartes à puce (1) sur sa face de tranche (31) tournée vers l'extérieur ou dans la zone d'un coin (32) ou d'un arrondissement de la carte (2) voisins de cette face de tranche (31) et qui appuie, au moins temporairement, sur la carte dans la direction d'insertion (9).

36. Procédé selon la revendication 35, **caractérisé par le fait que** l'organe de verrouillage (30r, 30l) pousse la carte (2) contre une butée (41) en permanence pendant les opérations d'écriture et/ou les opérations de lecture.

37. Procédé selon la revendication 35, **caractérisé par le fait que**, au cours d'une première phase, une unité de serrage saisit la carte (2), au cours d'une deuxième phase, la carte (2) est transportée dans le dispositif de réception de cartes à puce (1), au cours d'une troisième phase, le serrage de l'unité de serrage est dégagé de la carte (2) et, au cours d'une quatrième phase, l'unité de verrouillage (29) pousse la carte (2) dans une position finale.

38. Procédé selon la revendication 35, **caractérisé par le fait que**, au cours d'une quatrième phase, l'unité de verrouillage (29) pousse la carte (2) dans une position finale, dans laquelle des premiers contacts (56) d'un jeu de contacts (57) sont en liaison avec des surfaces de contact de la carte (2).

39. Procédé selon la revendication 35, **caractérisé par le fait que**, au cours d'une cinquième phase, des informations sont lues sur la carte (2) ou stockées sur la carte (2) .
